# EUROPÄISCHE PATENTANMELDUNG

(11) **EP 2 020 530 A2**
(43) Veröffentlichungstag der Anmeldung: **04.02.2009**
(21) Anmeldenummer: 08160485.2
(22) Anmeldetag: 16.07.2008
(51) Int. Cl.: F16F 9/58

(54) **Schwingungsdämpfer mit einer Druckanschlagfeder**

(30) Priorität: 01.08.2007 DE 102007036489
(71) Anmelder: ZF Friedrichshafen AG, 88038 Friedrichshafen (DE)
(72) Erfinder: Handke, Günther, 97502 Euerbach (DE)

(57) **Zusammenfassung**

Schwingungsdämpfer (1) mit einem Druckanschlag, der ortsfest zu einer Kolbenstange (5) angeordnet ist, die axial beweglich in einem Zylinder (3) geführt ist, wobei zylinderseitig eine Stirnfläche vorliegt, auf der der Druckanschlag ab einer definierten Hublage der Kolbenstange (5) anliegt, wobei der Druckanschlag von einer scheibenförmigen Feder (23) gebildet wird, die axial auf einem kolbenstangen Absatz (21) anliegt, wobei die Kolbenstange (5) von einem Schutzrohr (15) eingehüllt wird, das die scheibenförmige Feder (23) axial an der Kolbenstange (5) fixiert.

## Beschreibung

Die Erfindung betrifft einen Schwingungsdämpfer mit einer Druckanschlag gemäß dem Oberbegriff von Patentanspruch 1.

Druckanschläge, die konzentrisch zu einer Kolbenstange des Schwingungsdämpfers angeordnet sind und sich auf einer äußeren Stirnfläche eines Zylinders abstützen, sind beispielsweise aus der DE 102 47 640 B4 bekannt. Vielfach wird der Druckanschlag von einer Elastomerfeder gebildet, deren Federrate einerseits von der Raumform und andererseits von der Shore-Härte abhängt. Generell besteht bei einem Elastomerkörper das Überlastungsproblem. Deshalb kommt in der DE 102 47 640 B4 eine Elastomerkörper mit einer Tellerfeder in Kombination zum Einsatz.

Bei einem Druckanschlag in der Bauart nach der DE 102 47 640 B4 bestehen die Probleme, wie man eine Tellerfeder in einer Elastomerfeder montiert und wie verhindert wird, dass die von der Tellerfeder ausgehenden Reaktionskräfte den Elastomerkörper nicht zerstören.

Aufgabe der vorliegenden Erfindung ist es Druckanschlag für einen Schwingungsdämpfer zu realisieren, der einfach im Aufbau und vor allem dauerfest ist.

Erfindungsgemäß wird die Aufgabe dadurch gelöst, dass die scheibenförmige Feder axial auf einem kolbenstangenseitigen Absatz anliegt, wobei die Kolbenstange von einem Schutzrohr eingehüllt wird, das die scheibenförmige Feder axial an der Kolbenstange fixiert.

Durch die Verwendung der scheibenförmigen Feder mit einer soliden kolbenstangenseitigen Abstützung kann die Feder keine Schäden aufgrund der u. U: hohen Abstützkräfte verursachen. Die Montage gestaltet sich sehr einfach, da die scheibenförmige Feder, bzw. Federn, wenn mehrere zur Anwendung kommen, einfach auf die Kolbenstange aufgefädelt wird/werden. Als scheibenförmige Feder sind bevorzugt Tellerfedern vorgesehen.

Bei einer Alternativvariante umfasst die scheibenförmige Feder eine Stützscheibe mit einem Elastomerring. Der Elastomerring kann an der Stützscheibe angeklebt oder auch anvulkanisiert sein, damit sich der Elastomerring nicht von der Stützscheibe löst.

Als Überlastsicherung für den Elastomerring umfasst die Stützscheibe zumindest partiell einen in Richtung der zylinderseitigen Stirnfläche weisenden Rand auf, der ab einem definierten Federweg auf der zylinderseitigen Stirnfläche zur Anlage kommt.

In weiterer vorteilhafter Ausgestaltung weist das Schutzrohr eine metallische Tragscheibe auf, an der ein Rohrkörper befestigt ist. Die metallische Tragscheibe überträgt die notwendigen Vorspannkräfte und ermöglicht die Verwendung eines Rohrkörpers aus Kunststoff.

Gemäß einem vorteilhaften Unteranspruch wird das Schutzrohr zumindest mittelbar von einem kolbenstangenseitigen Anschlussorgan axial gehalten.

Des Weiteren ist vorgesehen, dass der Zylinder endseitig eine Endkappe trägt, auf der sich die scheibenförmige Feder abstützt. Gerade bei Schwingungsdämpfer mit einer Kolbenstange, die einen vergleichsweise großen Durchmesser aufweist, wäre die Abstützfläche für die scheibenförmige Feder zylinderseitig häufig zu klein. Mit der Endkappe wird dieses Problem gelöst.

Die auf die Endkappe einwirkenden Federkräfte können sehr beträchtliche Größenordnungen erreichen. Deshalb besteht die Endkappe bevorzugt aus einem metallischen Werkstoff.

Anhand der folgenden Figurenbeschreibung soll die Erfindung näher erläutert werden. Es zeigt:
- Fig.1: Druckanschlag mit einer Tellerfeder
- Fig. 2: Druckanschlag mit einem Elastomerring

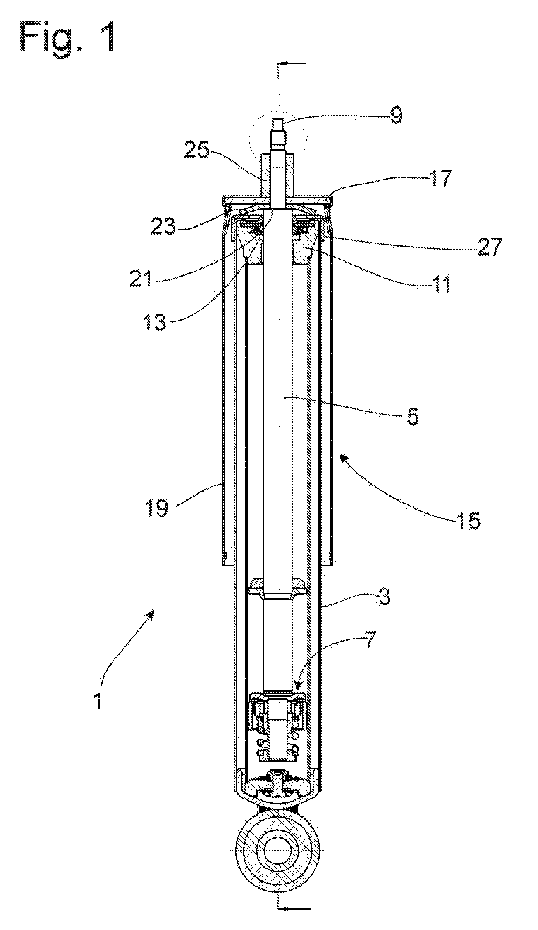

Die Figur 1 zeigt einen Schwingungsdämpfer 1 in Zweirohrausführung in einer Schnittdarstellung, wobei die Erfindung jedoch nicht auf diese Bauweise beschränkt ist. Innerhalb eines Zylinders 3 ist eine Kolbenstange 5 mit einem Kolben axial beweglich angeordnet. An ihrem äußeren Ende verfügt die Kolbenstange 5 über ein Befestigungsgewinde 9 für ein beliebiges nicht dargestelltes Anschlussorgan. Endseitig wird der Zylinder 3 von einer Kolbenstangenführung 11 verschlossen, die in einer Stufenöffnung eine Kolbenstangendichtung 13 trägt. Ein Schutzrohr 15 hüllt den außerhalb des Zylinders 3 befindlichen Längenabschnitt der Kolbenstange 5 ein. Das Schutzrohr 15 umfasst eine metallische Tragscheibe 17, an der ein Rohrkörper 19 aus Kunststoff befestigt ist.

Die Kolbenstange 5 verfügt über einen Absatz 21, auf dem ein Druckanschlag in der Ausführung einer scheibenförmigen Feder 23 aufliegt. Zur axialen Sicherung dient die Tragscheibe 17 des Schutzrohres 15, die unmittelbar auf der Feder 23 aufliegt. Die Tragscheibe 17 wiederum wird von dem Anschlussorgan ggf. in Verbindung mit einer Distanzhülse 25 fixiert.

Auf einer in Richtung der Tragscheibe 17 weisenden Stirnfläche des Zylinders 3 ist eine Endkappe 27 befestigt, die einerseits die Kolbenstangendichtung 13 schützt und anderseits die zur Verfügung stehende Abstützfläche für die scheibenförmige Feder 23 vergrößert. Die Endkappe 27 besteht bevorzugt aus einem metallischen Werkstoff und kann einfach auf das Ende des Zylinders 3 aufgepresst sein.

Bei einer extremen Einfederungsbewegung der Kolbenstange 5 kommt die scheibenförmige Feder 23 auf der zylinderseitigen Endkappe 27 zur Anlage und verhindert damit wirksam das ungebremste Anschlagen der Tragscheibe 17 auf der Stirnfläche des Zylinders 3, insbesondere bei relativ geringen Einfederungsgeschwindigkeiten, wenn keine Dämpfkräfte genutzt werden können.

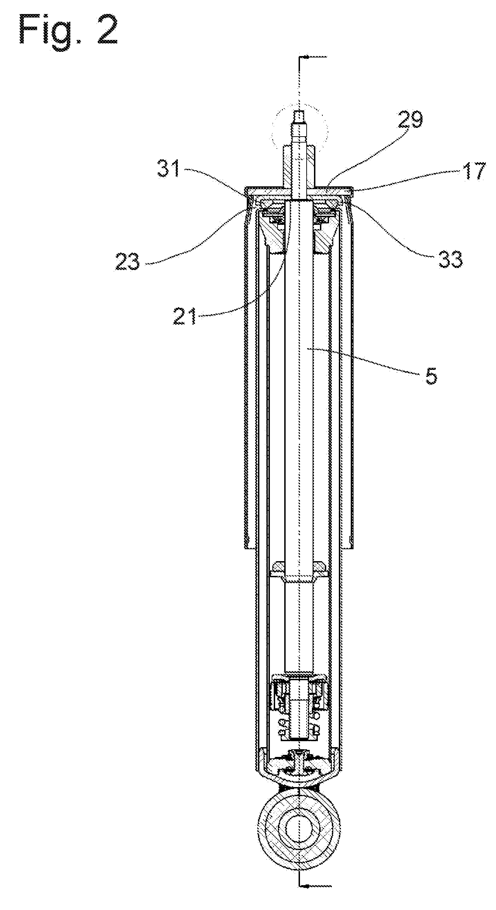

Bei einer Alternativvariante nach der Fig. 2 kommt ein Druckanschlag für einen im Prinzip gleichartigen Schwingungsdämpfer 1, jedoch ohne Endkappe 27, zur Anwendung, der eine die scheibenförmige Feder in der Bauform einer Stützscheibe 29 mit einem Elastomerring 31 umfasst. Der Elastomerring 31 kann an der Stützscheibe 29 angeklebt oder auch anvulkanisiert sein, damit sich der Elastomerring nicht von der Stützscheibe löst.

Als Überlastsicherung für den Elastomerring 31 weist die Stützscheibe 29 zumindest partiell einen in Richtung der zylinderseitigen Stirnfläche weisenden Rand 33 auf, der ab einem definierten Federweg auf der zylinderseitigen Stirnfläche zur Anlage kommt.

## Patentansprüche

1. Schwingungsdämpfer (1) mit einem Druckanschlag, der ortsfest zu einer Kolbenstange (5) angeordnet ist, die axial beweglich in einem Zylinder (3) geführt ist, wobei zylinderseitig eine Stirnfläche vorliegt, auf der der Druckanschlag ab einer definierten Hublage der Kolbenstange (5) anliegt, wobei der Druckanschlag von einer scheibenförmigen Feder (23) gebildet wird,
**dadurch gekennzeichnet,**
**dass** die scheibenförmige Feder (23) axial auf einem kolbenstangenseitigen Absatz (21) anliegt, wobei die Kolbenstange (5) von einem Schutzrohr (15) eingehüllt wird, das die scheibenförmige Feder axial an der Kolbenstange fixiert.

2. Schwingungsdämpfer nach Anspruch 1,
**dadurch gekennzeichnet,**
**dass** die scheibenförmige Feder (23) von eine Stützscheibe (29) mit einem Elastomerring (31) umfasst.

3. Schwingungsdämpfer nach Anspruch 2,
**dadurch gekennzeichnet,**
**dass** die Stützscheibe (29) zumindest partiell einen in Richtung der zylinderseitigen Stirnfläche weisenden Rand (33) umfasst, der ab einem definierten Federweg auf der zylinderseitigen Stirnfläche zur Anlage kommt.

4. Schwingungsdämpfer nach Anspruch 1,
**dadurch gekennzeichnet,**
**dass** das Schutzrohr (15) eine metallische Tragscheibe (17) aufweist, an der ein Rohrkörper (19) befestigt ist.

5. Schwingungsdämpfer nach Anspruch 1,
**dadurch gekennzeichnet,**
**dass** das Schutzrohr (15) zumindest mittelbar von einem kolbenstangenseitigen Anschlussorgan axial gehalten wird.

6. Schwingungsdämpfer nach Anspruch 1;
**dadurch gekennzeichnet,**
**dass** der Zylinder (3) endseitig eine Endkappe (27) trägt, auf der sich die scheibenförmige Feder (23) abstützt.

7. Schwingungsdämpfer nach Anspruch 6
**dadurch gekennzeichnet,**
**dass** die Endkappe (27) aus einem metallischen Werkstoff besteht.
